(19) Europäisches Patentamt
European Patent Office
Office européen des brevets

(11) EP 4 628 541 A1

(12) **EUROPEAN PATENT APPLICATION**
published in accordance with Art. 153(4) EPC

(43) Date of publication:
**08.10.2025 Bulletin 2025/41**

(21) Application number: **23897806.8**

(22) Date of filing: **29.11.2023**

(51) International Patent Classification (IPC):
***C08L 69/00*** *(2006.01)* ***C08K 3/016*** *(2018.01)*
***C08K 5/098*** *(2006.01)* ***C08K 5/42*** *(2006.01)*
***C08K 5/51*** *(2006.01)* ***C08K 5/5399*** *(2006.01)*

(52) Cooperative Patent Classification (CPC):
**C08K 3/016; C08K 5/098; C08K 5/42; C08K 5/51; C08K 5/5399; C08L 69/00**

(86) International application number:
**PCT/JP2023/042677**

(87) International publication number:
**WO 2024/117159 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.11.2022 JP 2022190767**
**11.10.2023 JP 2023176118**

(71) Applicant: **Mitsubishi Chemical Corporation**
**Tokyo 100-8251 (JP)**

(72) Inventor: **IRIE, Yasuyuki**
**Tokyo 100-8251 (JP)**

(74) Representative: **Vossius & Partner**
**Patentanwälte Rechtsanwälte mbB**
**Siebertstrasse 3**
**81675 München (DE)**

(54) **RESIN COMPOSITION, PELLET, MOLDED ARTICLE, AND METHOD FOR PRODUCING RESIN COMPOSITION**

(57) A resin composition comprises a polycarbonate resin and a flame retardant, wherein the polycarbonate resin comprises a recycled polycarbonate resin, wherein the resin composition is substantially free from fluoropolymers.



Processed by Luminess, 75001 PARIS (FR)

## Description

### Technical Field

The present invention relates to a resin composition, a pellet, a formed article, and a method for producing a resin composition. In particular, the present invention relates to a resin composition having a polycarbonate resin as a major component.

### Background Art

Polycarbonate resins are excellent in mechanical strength, electrical characteristics, transparency, and other properties, and are widely used as engineering plastics in various fields, such as the electrical and electronic equipment field and the automotive field. Polycarbonate resin materials may be required to have flame retardancy depending on the application.

Here, a resin composition that is excellent in flame retardancy is described in Patent Literature 1. Specifically, Patent Literature 1 discloses a polycarbonate resin composition containing, with respect to 100 parts by mass of a polycarbonate resin (A), 5 to 30 parts by mass of a flowability modifier (B), 3 to 20 parts by mass of a phosphorus-based flame retardant (C), 0.05 to 2 parts by mass of a fluoropolymer (D), 10 to 100 parts by mass of an inorganic filler including a plate-like inorganic filler (E), and 0.1 to 1 part by mass of an antioxidant (G) having an acyclic alkoxy group having 10 or more carbon atoms in the structure.

### Citation List

### Patent Literature

Patent Literature 1: Japanese Patent Laid-Open No. 2021-187863

### Summary of the Invention

### Technical Problem

Here, as the application of polycarbonate resins has diversified, there is a need for a new polycarbonate resin composition with excellent flame retardancy. In particular, there is a need for a resin composition that is excellent in flame retardancy and is also capable of providing formed articles of polycarbonate resin with excellent transparency, for example.

An object of the present invention is to solve such a problem, and an object thereof is to provide a resin composition that is excellent in flame retardancy, is also excellent in transparency, and contains a polycarbonate resin, as well as a pellet, a formed article, and a method for producing a resin composition.

### Solution to Problem

The present inventors conducted research to address the above-mentioned problems, and as a result, discovered that the problems described above could be solved by using a recycled polycarbonate resin as a polycarbonate resin, by using a flame retardant, and by not using substantially fluoropolymers.

Specifically, the problems described above are solved by the following means.

<1> A resin composition,

wherein the resin composition comprises a polycarbonate resin and a flame retardant,
wherein the polycarbonate resin comprises a recycled polycarbonate resin,
wherein the resin composition is substantially free from fluoropolymers, and
wherein a ratio between a viscosity average molecular weight (Mv) of a recycled polycarbonate resin (A-1) and a viscosity average molecular weight (Mv) of a polycarbonate resin (A-2) which has a highest viscosity average molecular weight contained in the resin composition, [Mv(A-1)]/[Mv(A-2)], is 0.9 or less.

<2> A resin composition,

wherein the resin composition comprises a polycarbonate resin and a flame retardant,

wherein the polycarbonate resin comprises a recycled polycarbonate resin,
wherein the resin composition is substantially free from fluoropolymers, and
wherein a content of the flame retardant is less than 25 parts by mass with respect to 100 parts by mass of the polycarbonate resin.

<3> The resin composition according to <1> or <2>, wherein the flame retardant comprises a metal salt-based flame retardant.
<4> The resin composition according to <1> or <2>, wherein the flame retardant comprises an alkali metal salt of sulfonic acid.
<5> The resin composition according to any one of <1> to <4>, wherein the flame retardant comprises a phosphorus-based flame retardant.
<6> The resin composition according to any one of <1> to <4>, wherein the flame retardant comprises a phosphazene compound.
<7> The resin composition according to any one of <1> to <6>, wherein the flame retardant is a solid flame retardant.
<8> The resin composition according to any one of <1> to <7>, wherein the recycled polycarbonate resin contains a constituent unit represented by the following formula (1):

Formula (1)

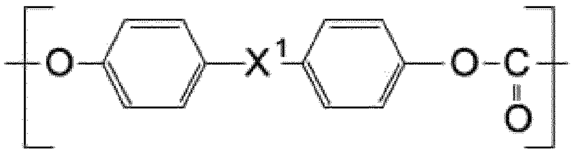

wherein $X^1$ represents any of the following formulae:

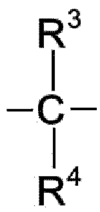 , 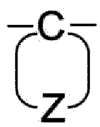

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

<9> The resin composition according to any one of <1> to <8>,

wherein the resin composition further comprises a virgin polycarbonate resin, and
wherein the virgin polycarbonate resin contains a constituent unit represented by the following formula (1):

Formula (1)

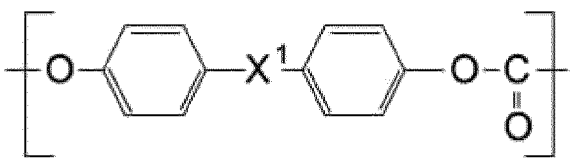

wherein $X^1$ represents any of the following formulae:

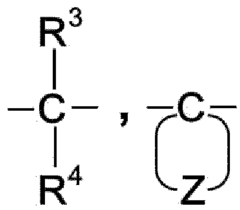

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

<10> The resin composition according to any one of <1> to <9>,

wherein the resin composition further comprises a virgin polycarbonate resin, and
wherein the virgin polycarbonate resin contains a constituent unit represented by the following formula (2):

Formula (2)

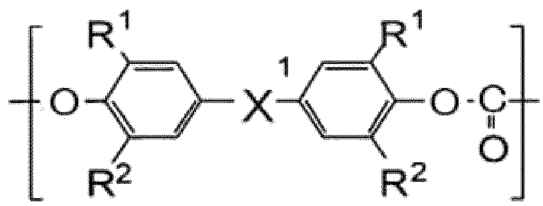

wherein $R^1$ represents a methyl group, $R^2$ represents a hydrogen atom or a methyl group, and $X^1$ represents any of the following formulae:

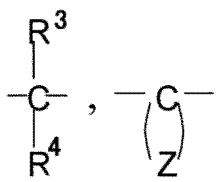

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

<11> The resin composition according to any one of <1> to <10>,

wherein a content of the polycarbonate resin is 10 to 95% by mass in the resin composition, and
wherein a content of the flame retardant is 0.005 parts by mass or more with respect to 100 parts by mass of the polycarbonate resin.

<12> The resin composition according to any one of <1> to <11>, wherein a mass ratio between the recycled polycarbonate resin (A-1) and the polycarbonate resin (A-2) which has a highest viscosity average molecular weight contained in the resin composition, is 10:90 to 90:10.
<13> The resin composition according to <1> or <2>,

wherein the flame retardant comprises an alkali metal salt of sulfonic acid and/or a phosphazene compound,
wherein the flame retardant is a solid flame retardant,
wherein the recycled polycarbonate resin contains a constituent unit represented by the following formula (1),
wherein the resin composition further comprises a virgin polycarbonate resin,
wherein the virgin polycarbonate resin contains a constituent unit represented by the following formula (1) and/or a constituent unit represented by the following formula (2),
wherein a content of the polycarbonate resin is 10 to 95% by mass in the resin composition,

wherein a content of the flame retardant is 0.005 parts by mass or more with respect to 100 parts by mass of the polycarbonate resin, and

wherein a mass ratio between the recycled polycarbonate resin (A-1) and the polycarbonate resin (A-2) which has a highest viscosity average molecular weight contained in the resin composition, is 10:90 to 90:10:

Formula (1)

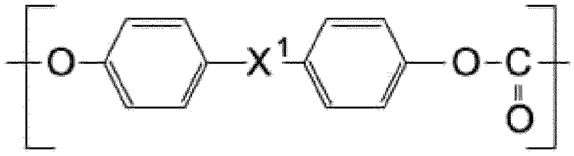

wherein $X^1$ represents any of the following formulae:

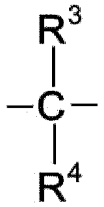 , 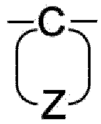

wherein $R^3$ and $R^4$ each independently represent a hydrogen atom or a methyl group, and Z represents a group that is bonded to C to form an alicyclic hydrocarbon having 6 to 12 carbon atoms and optionally having a substituent,

Formula (2)

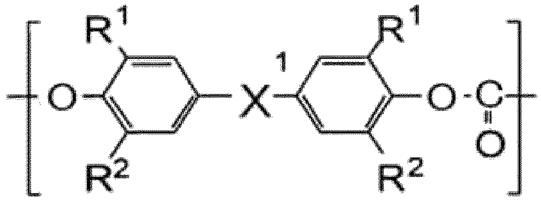

wherein $R^1$ represents a methyl group, $R^2$ represents a hydrogen atom or a methyl group, and $X^1$ represents any of the following formulae:

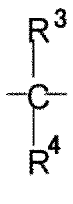 , 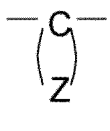

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

<14> A pellet of the resin composition according to any one of <1> to <13>.
<15> A formed article formed from the resin composition according to any one of <1> to <13>.
<16> A formed article formed from the pellet according to <14>.
<17> A method for producing a resin composition that is substantially free from fluoropolymers,

wherein the method comprises melt-kneading a recycled polycarbonate resin (A-1), a polycarbonate resin (A-2), and a flame retardant, and

wherein a ratio between a viscosity average molecular weight (Mv) of the recycled polycarbonate resin (A-1) and a viscosity average molecular weight (Mv) of the polycarbonate resin (A-2), [Mv(A-1)]/[Mv(A-2)], is 0.9 or less.

Advantageous Effects of the Invention

The present invention has made it possible to provide a resin composition that is excellent in flame retardancy, is also excellent in transparency, and contains a polycarbonate resin, as well as a pellet, a formed article, and a method for producing a resin composition.

Detailed Description of the Invention

From now on, a form for performing the present invention (hereinafter, simply referred to as "the present embodiment") will be described in detail. Note that the present embodiment below is merely an illustration for describing the present invention, and the present invention is not limited to the present embodiment.
Note that, as used herein, the expression "A to B" is used in the sense that the numerical values listed before and after "to" are included as the lower limit value and the upper limit value, respectively.
As used herein, various physical property values and characteristic values are those at 23°C, unless otherwise stated.
If the measurement methods or other details described in the standards presented herein differ from year to year, they are based on the standards as of January 1, 2022, unless otherwise stated.
A resin composition of the present embodiment is characterized by that the resin composition contains a polycarbonate resin and a flame retardant, that the polycarbonate resin includes a recycled polycarbonate resin, that the resin composition is substantially free from fluoropolymers, and that the ratio between the viscosity average molecular weight (Mv) of a recycled polycarbonate resin (A-1) and the viscosity average molecular weight (Mv) of a polycarbonate resin (A-2) which has the highest viscosity average molecular weight contained in the resin composition, [Mv(A-1)]/[Mv(A-2)], is 0.9 or less.
With such a configuration, a resin composition with excellent flame retardancy can be provided. In particular, excellent flame retardancy can be achieved even when no fluoropolymer having fibril forming ability, which is known as an anti-dripping agent, is blended in.
When a heat source is applied to a formed article of polycarbonate resin, the heat source causes the polycarbonate resin to be thermally decomposed, generating gas. When gas is generated, it advances combustion as a combustible gas, and heat is transferred to the formed article, further advancing the combustion. Accordingly, when attempting to make a formed article of polycarbonate resin have flame retardancy, it is only necessary to stop somewhere in the aforementioned cycle. It is assumed that the present embodiment was able to stop the transfer of heat by promoting the formation of a carbonized layer in the formed article during the combustion process.
More specifically, during the combustion process of polycarbonate resin, the polycarbonate resin repeatedly undergoes various multistage reactions, including isomerization, eventually forming a carbonized layer, which can stop the aforementioned combustion cycle. Here, it seems that the recycled polycarbonate resin has already undergone isomerization, and thus the reaction time to form the carbonized layer could have been shortened compared to the case of virgin polycarbonate resin.
Also, by using a metal salt-based flame retardant as the flame retardant, the amount of the flame retardant blended can be reduced.
Furthermore, in order to reduce the number of dripping times, an anti-dripping agent (for example, a fluoropolymer having fibril forming ability) may be blended, but blending of an anti-dripping agent increases the haze of the resin composition or formed article. In the present embodiment, the number of dripping times could be reduced even when no anti-dripping agent was blended in, and therefore, the transparency of the resin composition or formed article could be improved.

<Polycarbonate Resin>

The polycarbonate resin includes a recycled polycarbonate resin. By containing the recycled polycarbonate resin, the flame retardancy can be improved.
Recycled polycarbonate resin means virgin polycarbonate resin that has undergone some kind of reprocessing, and is intended to include not only recovered products but also rejected polycarbonate resin formed articles, end materials from the production of polycarbonate resin formed articles, rejected compound products, purging products, and the like. Forming processed articles are intended to include injection molded articles, extrusion molded articles, and formed articles formed by other production methods.
Examples of the recycled polycarbonate resin also include those obtained by material recycling, which involves

crushing and alkali cleaning recovered used polycarbonate resin formed articles for reuse in fibers, etc., those obtained by chemical recycling (chemical decomposition method), and those obtained by mechanical recycling.

Chemical recycling is the resynthesis of polycarbonate resin by chemical decomposition of recovered used polycarbonate resin formed articles back to the starting material level. Meanwhile, mechanical recycling is an approach that makes it possible to remove contaminants from polycarbonate resin formed articles more reliably than material recycling by performing alkali cleaning in the above-described material recycling more rigorously, or by performing vacuum drying at high temperature, for example.

For example, foreign matter is removed from used polycarbonate resin formed articles, which are then crushed and cleaned, and subsequently pelletized with an extruder to obtain recycled polycarbonate resin.

Examples of the used polycarbonate resin formed articles include discs, sheets (including films), meter covers, headlamp lenses, and bottles, with headlamp lenses and/or bottles being preferable.

Also, the recycled polycarbonate resin is not particularly limited as long as it contains a -[O-R-OC(=O)]- unit including a carbonate ester bond in the molecular main chain (R is an organic group, preferably a hydrocarbon group, and more preferably an aliphatic group, an aromatic group, or one including both aliphatic and aromatic groups, and also has a linear or branched structure). In the present embodiment, the recycled polycarbonate resin is preferably an aromatic polycarbonate resin, more preferably a polycarbonate resin having a bisphenol backbone, and still more preferably a bisphenol A type polycarbonate resin. By using such a recycled polycarbonate resin, more excellent heat resistance and toughness can be achieved.

In the present embodiment, the recycled polycarbonate resin is preferably a recycled polycarbonate resin containing a constituent unit represented by the following formula (1) and/or a constituent unit represented by the formula (2), which will be described later. It is more preferably a polycarbonate resin containing a constituent unit represented by the formula (1) in a proportion of 90% by mol or more of the entire constituent units, and it is still more preferably a polycarbonate resin containing a constituent unit represented by the formula (1) in a proportion of 95% by mol or more of the entire constituent units:

Formula (1)

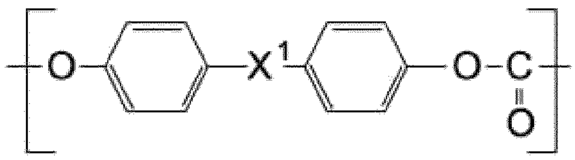

wherein $X^1$ represents any of the following formulae:

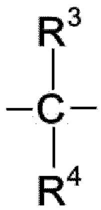

,

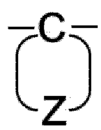

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

In the formula (1), when $X^2$ is

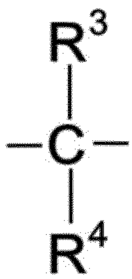

it is preferable that at least one of $R^3$ and $R^4$ is a methyl group, and it is more preferable that both of them are methyl groups.

Also, when $X^2$ is

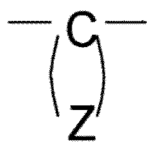

Z is bonded to carbon C, which is bonded to the two phenyl groups in the above formula (1), to form a divalent alicyclic hydrocarbon group having 6 to 12 carbon atoms, and examples of the divalent alicyclic hydrocarbon group include cycloalkylidene groups such as a cyclohexylidene group, a cycloheptylidene group, a cyclododecylidene group, an adamantylidene group, and a cyclododecylidene group. Examples of the substituted one include those having these methyl substituent and ethyl substituent. Among these, a cyclohexylidene group, a methyl-substituted product of a cyclohexylidene group (preferably 3,3,5-trimethyl-substituted product), and a cyclododecylidene group are preferable.

In the formula (1), $X^2$ is preferably the following structure.

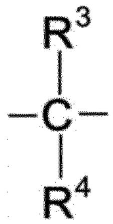

In the present embodiment, the recycled polycarbonate resin containing a constituent unit represented by the formula (1) may contain only one type of constituent unit represented by the formula (1), or may contain two or more types thereof.

The recycled polycarbonate resin containing a constituent unit represented by the formula (1) preferably contains the unit represented by the formula (1) in a proportion of 50% by mol or more of the entire constituent units, and furthermore, more preferably 60% by mol or more, and still more preferably 70% by mol or more. Depending on the application or other factors, the above proportion may be 80% by mol or more, 90% by mol or more, or 95% by mol or more, and it is also preferably 100% by mol or less.

In the present embodiment, the recycled polycarbonate resin may contain other constituent units other than the constituent unit represented by the formula (1). Examples of the other constituent units include constituent units derived from the dihydroxy compounds shown below.

Bis(4-hydroxyphenyl)methane, 2,2-bis(4-hydroxyphenyl) butane, 2,2-bis(4-hydroxyphenyl)pentane, 2,2-bis(4-hydroxyphenyl)-4-methylpentane, 2,2-bis(4-hydroxy-3-methylphenyl)propane, 2,2-bis(4-hydroxy-3,5-dimethylphenyl) propane, 2,2-bis(4-hydroxy-3-(1-methylethyl)phenyl)propane, 2,2-bis(4-hydroxy-3-tert-butylphenyl)propane, 2,2-bis(4-hydroxy-3-(1-methylpropyl)phenyl)propane, 2,2-bis(4-hydroxy-3-cyclohexylphenyl)propane, 2,2-bis(4-hydroxy-3-phenylphenyl)propane, 1,1-bis(4-hydroxyphenyl)decane, 1,1-bis(4-hydroxyphenyl)cyclohexane, 1,1-bis(4-hydroxyphenyl)-1-phenylethane, 1,1-bis(4-hydroxyphenyl)phenylmethane, 1,1-bis(4-hydroxy-3-methylphenyl)cyclohexane, 1,1-bis(4-hydroxy-3,5-dimethylphenyl)cyclohexane, 1,1-bis(4-hydroxy-3-(1-methylethyl)phenyl)cyclohexane, 1,1-bis(4-hydroxy-3-tert-butylphenyl)cyclohexane, 1,1-bis(4-hydroxy-3-(1-methylpropyl)phenyl)cyclohexane, 1,1-bis(4-hydroxy-3-cyclohexylphenyl)cyclohexane, 1,1-bis(4-hydroxy-3-phenylphenyl)cyclohexane, 1,1-bis(4-hydroxy-3-methylphenyl)-1-phenylethane, 1,1-bis(4-hydroxy-3,5-dimethylphenyl)-1-phenylethane, 1,1-bis(4-hydroxy-3-(1-methylethyl)phenyl)-1-phenylethane, 1,1-bis(4-hydroxy-3-tert-butylphenyl)-1-phenylethane, 1,1-bis(4-hydroxy-3-(1-methylpropyl)phenyl)-1-phenylethane, 1,1-bis(4-hydroxy-3-cyclohexylphenyl)-1-phenylethane, 1,1-bis(4-hydroxy-3-phenylphenyl)-1-phenylethane, 1,1-bis(4-hydroxyphenyl)cyclopentane, 1,1-bis(4-hydroxyphenyl)cyclooctane, 4,4'-(1,3-phenylenediisopropylidene)bisphenol, 4,4'-(1,4-phenylenediisopropylidene)bisphenol, 9,9-bis(4-hydroxyphenyl)fluorene, 9,9-bis(4-hydroxy-3-methylphenyl)fluorene, 4,4'-dihydroxybenzophenone, 4,4'-dihydroxyphenyl ether, 4,4'-dihydroxybiphenyl, 1,1-bis(4-hydroxyphenyl)-3,3,5-trimethylcyclohexane, and 1,1-bis(4-hydroxy-6-methyl-3-tert-butylphenyl)butane.

Also, as one embodiment of the other constituent units, the constituent unit represented by the formula (1) described in paragraph 0008 of International Publication No. WO 2017/099226, the description in paragraphs 0043 to 0052 of International Publication No. WO 2017/099226, and the description in Japanese Patent Laid-Open No. 2011-046769 can be referred to, the contents of which are incorporated herein.

As for the viscosity average molecular weight (Mv) of the recycled polycarbonate resin used in the present embodiment, the lower limit value is preferably 10,000 or more, and more preferably 15,000 or more. Depending on the

application or other factors, it may be 18,000 or more, 20,000 or more, 23,000 or more, or 25,000 or more. Also, the upper limit value of Mv is preferably 100,000 or less, more preferably 80,000 or less, still more preferably 50,000 or less, and even more preferably 30,000 or less.

The viscosity average molecular weight (Mv) of the polycarbonate resin is calculated by using methylene chloride as the solvent, determining the intrinsic viscosity (η) (unit: dL/g) at a temperature of 20°C using an Ubbelohde viscometer, and using the following the Schnell's viscosity equation.

$$\eta = 1.23 \times 10^{-4} Mv^{0.83}$$

The proportion of the recycled polycarbonate resin (preferably, recycled polycarbonate resin containing a constituent unit represented by the formula (1)) in the resin composition of the present embodiment is preferably 5% by mass or more, more preferably 10% by mass or more, still more preferably 30% by mass or more, even more preferably 50% by mass or more, even further preferably 70% by mass or more, yet further preferably 90% by mass or more, particularly further preferably 95% by mass or more, and even particularly further preferably 99% by mass or more in the resin composition. The upper limit of the proportion of the recycled polycarbonate resin (preferably, recycled polycarbonate resin containing a constituent unit represented by the formula (1)) in the resin composition is preferably 100% by mass or less.

The resin composition of the present embodiment may contain only one type of recycled polycarbonate resin, or may contain two or more types thereof. When two or more types are contained, it is preferable that the total amount is in the range described above.

The resin composition of the present embodiment may further contain a virgin polycarbonate resin. The virgin polycarbonate resin preferably contains a constituent unit represented by the formula (1) and/or a constituent unit represented by the formula (2), and it is more preferably a polycarbonate resin containing a constituent unit represented by the formula (1) and/or a constituent unit represented by the formula (2) in 90% by mol or more in total of the entire constituent units.

First, a polycarbonate resin containing a constituent unit represented by the formula (1) will be described.

Formula (1)

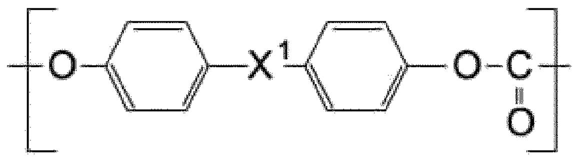

wherein $X^1$ represents any of the following formulae:

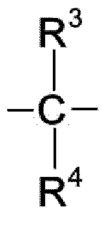
,
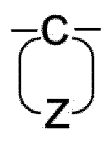

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

The details of the constituent unit represented by the formula (1) have the same meaning as the matters described above for the recycled polycarbonate resin, and the preferable range is also the same.

The virgin polycarbonate resin containing a constituent unit represented by the formula (1) preferably contains the unit represented by the formula (1) in a proportion of 50% by mol or more of the entire constituent units, more preferably more than 50% by mol, still more preferably 60% by mol or more, and even more preferably 70% by mol or more. Depending on the application or other factors, the above proportion may be 80% by mol or more, 90% by mol or more, or 95% by mol or more, and it is also preferably 100% by mol or less.

Next, a polycarbonate resin containing a constituent unit represented by the formula (2) will be described:

Formula (2)

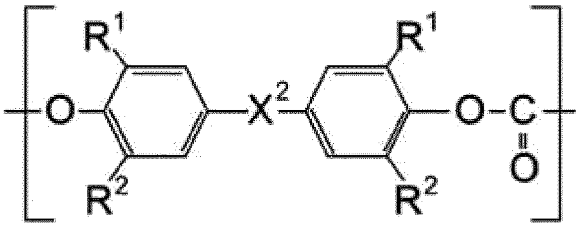

wherein $R^1$ represents a methyl group, $R^2$ represents a hydrogen atom or a methyl group, and $X^2$ represents any of the following formulae:

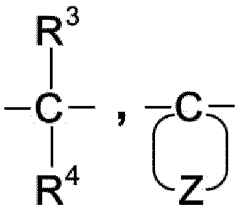

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

The two $R^2$ in the formula (2) may be the same as or different from each other, and are preferably the same. $R^2$ is preferably a hydrogen atom.

In the formula (2), when $X^2$ is

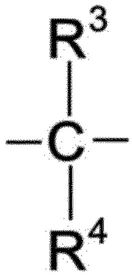

it is preferable that at least one of $R^3$ and $R^4$ is a methyl group, and it is more preferable that both of them are methyl groups.

Also, when $X^2$ is

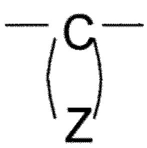

Z is bonded to carbon C, which is bonded to the two phenyl groups in the above formula (2), to form a divalent alicyclic hydrocarbon group having 6 to 12 carbon atoms, and examples of the divalent alicyclic hydrocarbon group include cycloalkylidene groups such as a cyclohexylidene group, a cycloheptylidene group, a cyclododecylidene group, an adamantylidene group, and a cyclododecylidene group. Examples of the substituted one include those having these methyl substituent and ethyl substituent. Among these, a cyclohexylidene group, a methyl-substituted product of a cyclohexylidene group (preferably 3,3,5-trimethyl-substituted product), and a cyclododecylidene group are preferable.

In the formula (2), $X^2$ is preferably the following structure.

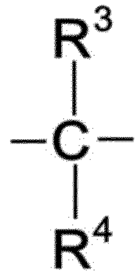

In the present embodiment, the polycarbonate resin may contain only one type of constituent unit represented by the formula (2), or may contain two or more types thereof.

In the present embodiment, the polycarbonate resin may contain other constituent units other than the constituent unit represented by the formula (2). Examples of the other constituent units include constituent units derived from the dihydroxy compounds exemplified as the other constituent units other than the constituent unit represented by the formula (1) described above in the section of the recycled polycarbonate resin.

The virgin polycarbonate resin containing a constituent unit represented by the formula (2) preferably contains the unit represented by the formula (2) in a proportion of 50% by mol or more of the entire constituent units, more preferably more than 50% by mol, still more preferably 60% by mol or more, and even more preferably 70% by mol or more. Depending on the application or other factors, the above proportion may be 80% by mol or more, 90% by mol or more, or 95% by mol or more, and it is also preferably 100% by mol or less.

As for the viscosity average molecular weight (Mv) of the virgin polycarbonate resin (for example, virgin polycarbonate resin containing a constituent unit represented by the formula (1) and/or a constituent unit represented by the formula (2)) used in the present embodiment, the lower limit value is preferably 10,000 or more, more preferably 15,000 or more, still more preferably 18,000 or more, and even more preferably 20,000 or more. Depending on the application or other factors, it may be 23,000 or more, 25,000 or more, or 26,000 or more. Also, the upper limit value of Mv is preferably 100,000 or less, and more preferably 80,000 or less. Depending on the application or other factors, it may be 50,000 or less or 30,000 or less.

The proportion of the virgin polycarbonate resin in the resin composition of the present embodiment is, when contained, preferably 95% by mass or less, more preferably 90% by mass or less, still more preferably 70% by mass or less, even more preferably 50% by mass or less, and even further preferably 30% by mass or less, and it is also preferably 1% by mass or more, more preferably 5% by mass or more, and still more preferably 10% by mass or more in the resin composition.

The resin composition of the present embodiment may contain only one type of virgin polycarbonate resin, or may contain two or more types thereof. When two or more types are contained, it is preferable that the total amount is in the range described above.

In the resin composition of the present embodiment, the ratio between the viscosity average molecular weight (Mv) of a recycled polycarbonate resin (A-1) and the viscosity average molecular weight (Mv) of a polycarbonate resin (A-2) which has the highest viscosity average molecular weight contained in the resin composition, [Mv(A-1)]/[Mv(A-2)], is 0.9 or less. Such a ratio tends to further improve flame retardancy.

Here, the viscosity average molecular weight of the recycled polycarbonate resin (A-1) means the viscosity average molecular weight of all recycled polycarbonate resins (mixture) (except that corresponding to (A-2)) contained in the resin composition. On the other hand, the polycarbonate resin (A-2) which has the highest viscosity average molecular weight contained in the resin composition, may be either recycled polycarbonate resin or virgin polycarbonate resin, and means the polycarbonate resin with the highest viscosity average molecular weight among the polycarbonate resins contained in the resin composition. In the present embodiment, the polycarbonate resin (A-2) with the highest viscosity average molecular weight is preferably virgin polycarbonate resin.

The above [Mv(A-1)]/[Mv(A-2)] is preferably 0.87 or less, and more preferably 0.85 or less, and it is also preferably 0.35 or more.

Here, when the resin composition of the present embodiment satisfies [Mv(A-1)]/[Mv(A-2)] of 0.9 or less, the viscosity average molecular weight of the recycled polycarbonate resin (A-1) is preferably 10000 or more, and more preferably 12000 or more, and it is also preferably less than 23000. On the other hand, when the resin composition of the present embodiment satisfies [Mv(A-1)]/[Mv(A-2)] of 0.9 or less, the viscosity average molecular weight of the polycarbonate resin (A-2) is preferably 23000 or more, and more preferably 24000 or more, and may be 30000 or more. It is also preferably 80000 or less.

In the resin composition of the present embodiment, the mass ratio between the recycled polycarbonate resin (A-1) and the polycarbonate resin (A-2) which has the highest viscosity average molecular weight contained in the resin composition, is preferably 10:90 to 90:10, more preferably 15:85 to 85:15, and still more preferably 20:80 to 80:20.

<Flame Retardant>

The resin composition of the present embodiment may contain a flame retardant. The resin composition of the present embodiment can achieve excellent flame retardancy by containing a flame retardant along with the recycled polycarbonate resin.

The flame retardant used in the present embodiment is preferably a solid flame retardant. The solid flame retardant means one that is solid (including powder and particles) at 23°C. The use of a solid flame retardant facilitates production due to improved handleability at the time of melt kneading and suppressed plasticization characteristics. Examples of the solid flame retardant include potassium nonafluorobutanesulfonate, potassium diphenylsulfonesulfonate, and a phenoxyphosphazene compound.

Also, the flame retardant used in the present embodiment preferably includes at least one selected from the group consisting of a halogen-based flame retardant, a phosphorus-based flame retardant, a metal salt-based flame retardant, and a silicone-based flame retardant, more preferably includes at least one selected from the group consisting of a phosphorus-based flame retardant and a metal salt-based flame retardant, and still more preferably includes a metal salt-based flame retardant. By including a metal salt-based flame retardant, sufficient flame retardancy can be achieved even with a small amount blended.

As the metal salt-based flame retardant, an alkali metal salt is preferable. By containing an alkali metal salt (alkali metal salt-based flame retardant), formed articles that are excellent in flame retardancy can be obtained. The alkali metal salt is normally an alkali metal salt of an organic acid.

Examples of the alkali metal salt include an alkali metal salt of sulfonic acid, an alkali metal salt of carboxylic acid, an alkali metal salt of boric acid, and an alkali metal salt of phosphoric acid, but in terms of thermal stability, an alkali metal salt of sulfonic acid is preferable.

Examples of the metal constituting the alkali metal salt include lithium (Li), sodium (Na), potassium (K), rubidium (Rb), and cesium (Cs), among which sodium, potassium, and cesium are preferable, with sodium and potassium being more preferable, and potassium being still more preferable.

Preferable examples of the alkali metal salt of sulfonic acid include an alkali metal salt of a fluorine-containing aliphatic sulfonic acid or an aromatic sulfonic acid. Among the above, specific preferable examples thereof include an alkali metal salt of a fluorine-containing aliphatic sulfonic acid having at least one C-F bond in the molecule (preferably having a fluoroalkyl group in the molecule), such as potassium nonafluorobutanesulfonate, lithium nonafluorobutanesulfonate, sodium nonafluorobutanesulfonate, cesium nonafluorobutanesulfonate, potassium trifluoromethanesulfonate, lithium trifluoromethanesulfonate, sodium trifluoromethanesulfonate, and cesium trifluoromethanesulfonate; and an alkali metal salt of an aromatic sulfonic acid having at least one aromatic group in the molecule (preferably having two aromatic groups in the molecule), such as dipotassium diphenylsulfonedisulfonate, potassium diphenylsulfonesulfonate, sodium benzenesulfonate, sodium (poly)styrenesulfonate, sodium p-toluenesulfonate, sodium (branched) dodecylbenzenesulfonate, sodium trichlorobenzenesulfonate, potassium benzenesulfonate, potassium styrenesulfonate, potassium (poly)styrenesulfonate, potassium p-toluenesulfonate, potassium (branched) dodecylbenzenesulfonate, potassium trichlorobenzenesulfonate, cesium benzenesulfonate, cesium (poly)styrenesulfonate, cesium p-toluenesulfonate, cesium (branched) dodecylbenzenesulfonate, and cesium trichlorobenzenesulfonate.

For other metal salt-based flame retardants, the description in paragraphs 0069 to 0078 of Japanese Patent Laid-Open No. 2015-117298 can be referred to, the contents of which are incorporated herein.

As for the phosphorus-based flame retardant, the phosphorus-based flame retardant used in the present invention is not particularly restricted as long as it is a flame retardancy-imparting component containing phosphorus in the molecule. Preferable examples of the phosphorus-based flame retardant include a condensed phosphate ester-based flame retardant and a phosphazene compound, with a phosphazene compound being preferable.

<<Condensed Phosphate Ester-Based Flame Retardant>>

Examples of the condensed phosphate ester-based flame retardant include a condensed phosphate ester compound represented by the following formula (5).

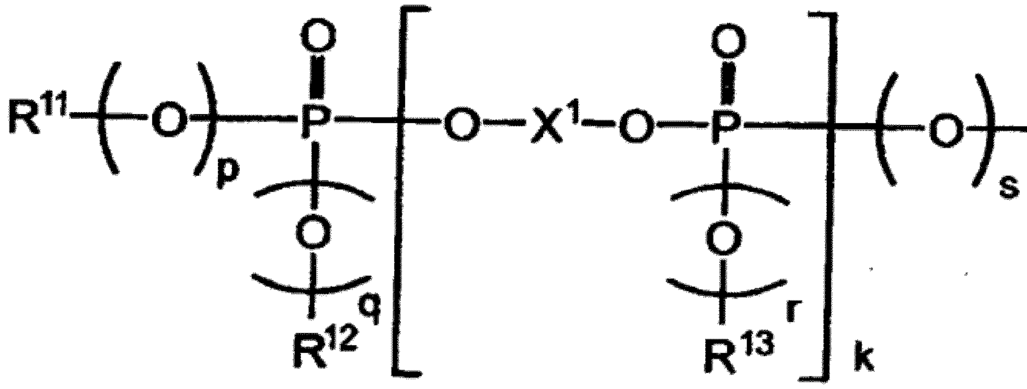

···(5)

The condensed phosphate ester compound represented by the above formula (5) may be a mixture of compounds having different numbers of k. In the case of a mixture of such condensed phosphate esters having different k, k is the average value of their mixture. k is normally an integer of 0 to 5, and in the case of a mixture of compounds having different numbers of k, the average number of k is preferably in the range of 0.5 to 2, more preferably 0.6 to 1.5, still more preferably 0.8 to 1.2, and particularly preferably 0.95 to 1.15.

Also, $X^1$ represents a divalent arylene group, and it is, for example, a divalent group derived from a dihydroxy compound such as resorcinol, hydroquinone, bisphenol A, 2,2'-dihydroxybiphenyl, 2,3'-dihydroxybiphenyl, 2,4'-dihydroxybiphenyl, 3,3'-dihydroxybiphenyl, 3,4'- dihydroxybiphenyl, 4,4'-dihydroxybiphenyl, 1,2-dihydroxynaphthalene, 1,3-dihydroxynaphthalene, 1,4-dihydroxynaphthalene, 1,5-dihydroxynaphthalene, 1,6-dihydroxynaphthalene, 1,7-dihydroxynaphthalene, 1,8-dihydroxynaphthalene, 2,3-dihydroxynaphthalene, 2,6-dihydroxynaphthalene, or 2,7-dihydroxynaphthalene. Among these, in particular, divalent groups derived from resorcinol, bisphenol A, and 3,3'-dihydroxybiphenyl are preferable.

In the formula (5), p, q, r, and s each represent 0 or 1, among which 1 is preferable.

$R^{11}$, $R^{12}$, $R^{13}$, and $R^{14}$ in the formula (5) each represent an alkyl group having 1 to 6 carbon atoms or an aryl group having 6 to 20 carbon atoms and optionally substituted with an alkyl group. Examples of such an aryl group include a phenyl group, a cresyl group, a xylyl group, an isopropylphenyl group, a butylphenyl group, a tert-butylphenyl group, a di-tert-butylphenyl group, and a p-cumylphenyl group, with a phenyl group, a cresyl group, and a xylyl group being more preferable.

Specific examples of the condensed phosphate ester compound represented by the formula (5) include: an aromatic phosphate ester such as triphenyl phosphate (TPP), tricresyl phosphate (TCP), trixylenyl phosphate (TXP), cresyl diphenyl phosphate (CDP), 2-ethylhexyl diphenyl phosphate (EHDP), tert-butylphenyl diphenyl phosphate, bis-(tert-butylphenyl) phenyl phosphate, tris-(tert-butylphenyl) phosphate, isopropylphenyl diphenyl phosphate, bis-(isopropylphenyl) diphenyl phosphate, and tris-(isopropylphenyl) phosphate; and a condensed phosphate ester such as resorcinol bis-diphenyl phosphate (RDP), resorcinol bis-dixylenyl phosphate (RDX), bisphenol A bis-diphenyl phosphate (BDP), and biphenyl bis-diphenyl phosphate.

The acid number of the condensed phosphate ester compound represented by the formula (5) is preferably 0.2 mgKOH/g or less, more preferably 0.15 mgKOH/g or less, still more preferably 0.1 mgKOH or less, and particularly preferably 0.05 mgKOH/g or less. The lower limit of such an acid number can also be substantially 0. In addition, the content of a half ester of the condensed phosphate ester compound represented by the formula (5) is preferably 1% by mass or less, and more preferably 0.5% by mass or less. By setting the acid number to 0.2 mgKOH/g or less and the half ester content to 1% by mass or less, the thermal stability and hydrolysis resistance of the resin composition of the present embodiment tend to be further improved.

In addition to those mentioned above, the phosphate ester compound also includes polyester resins, polycarbonate resins, or epoxy resins containing a phosphate ester moiety.

<<Phosphazene Compound>>

As the phosphorus-based flame retardant, the phosphazene compound is also preferable. By containing the phosphazene compound, the resulting formed article tends to be more excellent in heat resistance.

The phosphazene compound that may be used in the present embodiment is an organic compound having a -P=N- bond in the molecule, and preferable examples of the phosphazene compound include a cyclic phosphazene compound represented by the following formula (6A), a chain phosphazene compound represented by the following formula (6B), and a crosslinked phosphazene compound in which at least one phosphazene compound selected from the group consisting of the formula (6A) and the formula (6B) is crosslinked by a crosslinking group. As the crosslinked

phosphazene compound, one crosslinked by a crosslinking group represented by the following formula (6C) is preferable in terms of flame retardancy.

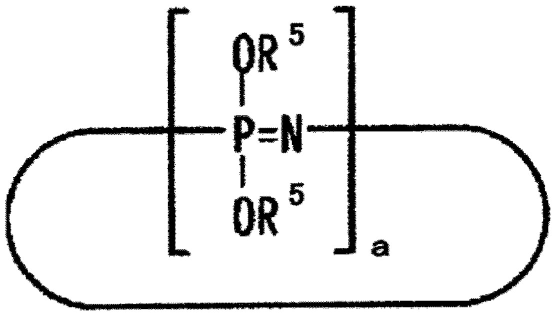

(6A)

(In the formula (6A), a is an integer of 3 to 25, and $R^5$ may be the same or different and represents an aryl group or an alkylaryl group.)

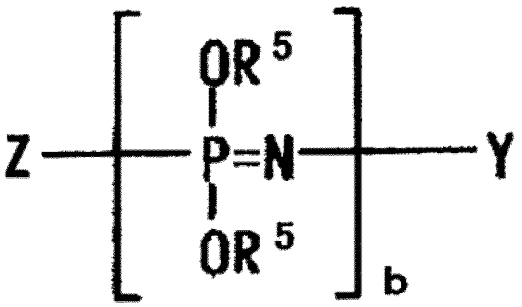

(6B)

(In the formula (6B), b is an integer of 3 to 10,000, Z represents a $-N=P(OR^5)_3$ group or a $-N=P(O)OR^5$ group, and Y represents a $-P(OR^5)4$ group or a $P(O)(OR^5)2$ group. $R^5$ may be the same or different and represents an aryl group or an alkylaryl group.)

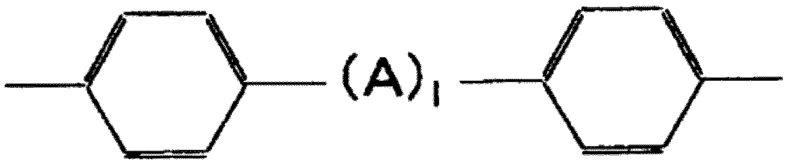

(6C)

(In the formula (6C), A is $-C(CH_3)_2-$, $-SO_2-$, -S-, or -O-, and 1 is 0 or 1.)

Examples of the cyclic and/or chain phenoxyphosphazene compounds represented by the formulae (6A) and (6B) may include a cyclic and/or chain C1-6 alkyl C6-20 aryloxyphosphazene, such as phenoxyphosphazene, (poly) tolyloxyphosphazene (for example, o-tolyloxyphosphazene, m-tolyloxyphosphazene, p-tolyloxyphosphazene, o,m-tolyloxyphosphazene, o,p-tolyloxyphosphazene, m,p-tolyloxyphosphazene, o,m,p-tolyloxyphosphazene, and the like), and (poly)xylyloxyphosphazene; and a cyclic and/or chain C6-20 aryl C1-10 alkyl C6-20 aryloxyphosphazene, such as (poly) phenoxy tolyloxyphosphazene (for example, phenoxy o-tolyloxyphosphazene, phenoxy m-tolyloxyphosphazene, phenoxy p-tolyloxyphosphazene, phenoxy o,m-tolyloxyphosphazene, phenoxy o,p-tolyloxyphosphazene, phenoxy m,p-tolyloxyphosphazene, phenoxy o,m,p-tolyloxyphosphazene, and the like), (poly)phenoxy xylyloxyphosphazene, and (poly)phenoxy tolyloxy xylyloxyphosphazene, with a cyclic and/or chain phenoxyphosphazene, a cyclic and/or chain C1-3 alkyl C6-20 aryloxyphosphazene, and a C6-20 aryloxy C1-3 alkyl C6-20 aryloxyphosphazene (for example, cyclic and/or chain tolyloxyphosphazene, cyclic and/or chain phenoxy tolylphenoxyphosphazene, and the like) being preferable. Note that the description "C1-6" here means "having 1 to 6 carbon atoms", and the same applies to "C6-20", "C1-10", and the like. Also, the description "(poly)phenoxy ..." refers to one or both of "phenoxy ..." and "polyphenoxy ...".

As the cyclic phosphazene compound represented by the formula (6A), cyclic phenoxyphosphazene in which $R^5$ is a phenyl group is particularly preferable. Examples of such a cyclic phenoxyphosphazene compound include compounds such as phenoxycyclotriphosphazene, octaphenoxycyclotetraphosphazene, and decaphenoxycyclopentaphosphazene, obtained by allowing ammonium chloride and phosphorus pentachloride to react with each other at a temperature of 120 to 130°C to obtain a cyclic and linear chlorophosphazene mixture, from which cyclic chlorophosphazene such as hexachlorocyclotriphosphazene, octachlorocyclotetraphosphazene, and decachlorocyclopentaphosphazene is taken out and then substituted with a phenoxy group. Also, the cyclic phenoxyphosphazene compound is preferably a compound in which a in the formula (6A) is an integer of 3 to 8, and it may be a mixture of compounds with different a. In particular, a mixture of compounds is preferable in which those with a = 3 are 50% by mass or more, those with a = 4 are 10 to 40% by mass, and those with a = 5 or more are 30% by mass or less in total.

As the chain phosphazene compound represented by the formula (6B), chain phenoxyphosphazene in which $R^5$ is a phenyl group is particularly preferable. Examples of such a chain phenoxyphosphazene compound include a compound obtained by subjecting hexachlorocyclotriphosphazene obtained by the method described above to ring-opening polymerization at a temperature of 220 to 250°C and substituting the resulting linear dichlorophosphazene with a degree of polymerization of 3 to 10,000 with a phenoxy group. As for the linear phenoxyphosphazene compound, b in the formula (6B) is preferably 3 to 1,000, more preferably 3 to 100, and still more preferably 3 to 25.

Examples of the crosslinked phenoxyphosphazene compound include compounds having a crosslinked structure of a 4,4'-diphenylene group, such as a compound having a crosslinked structure of 4,4'-sulfonyldiphenylene (bisphenol S residue), a compound having a crosslinked structure of a 2,2-(4,4'-diphenylene)isopropylidene group, a compound having a crosslinked structure of a 4,4'-oxydiphenylene group, and a compound having a crosslinked structure of a 4,4'-thiodiphenylene group.

Also, as the crosslinked phosphazene compound, a crosslinked phenoxyphosphazene compound in which a cyclic phenoxyphosphazene compound in which $R^5$ in the above formula (6A) is a phenyl group is crosslinked by a crosslinking group represented by the above formula (6C) or a crosslinked phenoxyphosphazene compound in which a chain phenoxyphosphazene compound in which $R^5$ in the above formula (6B) is a phenyl group is crosslinked by a crosslinking group represented by the above formula (6C) is preferable in terms of flame retardancy, and a crosslinked phenoxyphosphazene compound in which a cyclic phenoxyphosphazene compound is crosslinked by a crosslinking group represented by the above formula (6C) is more preferable.

In addition, the content of phenylene groups in the crosslinked phenoxyphosphazene compound is normally 50 to 99.9%, preferably 70 to 90%, based on the total number of phenyl groups and phenylene groups in the cyclic phosphazene compound represented by the formula (6A) and/or the chain phenoxyphosphazene compound represented by the formula (6B). Also, it is particularly preferable that the crosslinked phenoxyphosphazene compound is a compound having no free hydroxy groups in the molecule.

In the present invention, the phosphazene compound is preferably at least one selected from the group consisting of a cyclic phenoxyphosphazene compound represented by the above formula (6A) and a crosslinked phenoxyphosphazene compound in which a cyclic phenoxyphosphazene compound represented by the above formula (6A) is crosslinked by a crosslinking group in terms of flame retardancy and mechanical characteristics.

Examples of commercial products of such a phosphazene compound include "Rabitle FP-110T" and "Rabitle FP-100T" manufactured by Fushimi Pharmaceutical Co., Ltd., and "SPS100" manufactured by Otsuka Chemical Co., Ltd., which are phenoxyphosphazene.

In addition to the above, for the phosphorus-based flame retardant, the description in paragraphs 0044 to 0056 of Japanese Patent Laid-Open No. 2022-80749 can be referred to, the contents of which are incorporated herein.

The content of the flame retardant (preferably metal salt-based flame retardant, more preferably alkali metal salt of sulfonic acid) in the resin composition of the present embodiment is preferably 0.005 parts by mass or more, more preferably 0.008 parts by mass or more, still more preferably 0.01 parts by mass or more, even more preferably 0.03 parts by mass or more, and even further preferably 0.05 parts by mass or more with respect to 100 parts by mass of the polycarbonate resins (the total of the virgin polycarbonate resin and the recycled polycarbonate resin). By setting the content to the lower limit value described above or more, the formation of a carbonized layer during the combustion of polycarbonate resin can be promoted and the flame retardancy can be further enhanced. Also, the content of the flame retardant is preferably 30 parts by mass or less, more preferably 25 parts by mass or less, still more preferably less than 25 parts by mass, even more preferably 20 parts by mass or less, and even further preferably 15 parts by mass or less with respect to 100 parts by mass of the polycarbonate resin. Furthermore, it is preferably, in order, 10 parts by mass or less, 5 parts by mass or less, 3 parts by mass or less, 1 part by mass or less, 0.8 parts by mass or less, 0.5 parts by mass or less, 0.3 parts by mass or less, 0.2 parts by mass or less, or 0.15 parts by mass or less. By setting the content to the upper limit value described above or less, although the content of the flame retardant is reduced, the flame retardant effect tends to be more effectively demonstrated.

The resin composition of the present embodiment may contain only one type of flame retardant, or may contain two or more types thereof. When two or more types are contained, it is preferable that the total amount is in the range described above.

When the resin composition of the present embodiment contains a metal salt-based flame retardant, its content is preferably 0.005 parts by mass or more, more preferably 0.008 parts by mass or more, still more preferably 0.01 parts by mass or more, even more preferably 0.03 parts by mass or more, and even further preferably 0.05 parts by mass or more with respect to 100 parts by mass of the polycarbonate resins (the total of the virgin polycarbonate resin and the recycled polycarbonate resin). By setting the content to the lower limit value described above or more, the formation of a carbonized

layer during the combustion of polycarbonate resin can be promoted and the flame retardancy can be further enhanced. Also, the content of the flame retardant is preferably 1 part by mass or less, more preferably 0.8 parts by mass or less, still more preferably 0.5 parts by mass or less, even more preferably 0.3 parts by mass or less, even further preferably 0.2 parts by mass or less, and yet further preferably 0.15 parts by mass or less with respect to 100 parts by mass of the polycarbonate resin. By setting the content to the upper limit value described above or less, although the content of the flame retardant is reduced, the flame retardant effect tends to be more effectively demonstrated.

When the resin composition of the present embodiment contains a phosphorus-based flame retardant, its content is preferably 1 part by mass or more, more preferably 3 parts by mass or more, still more preferably 5 parts by mass or more, and even more preferably 10 parts by mass or more with respect to 100 parts by mass of the polycarbonate resins (the total of the virgin polycarbonate resin and the recycled polycarbonate resin). By setting the content to the lower limit value described above or more, the formation of a carbonized layer during the combustion of polycarbonate resin can be promoted and the flame retardancy can be further enhanced. Also, the content of the flame retardant is preferably 30 parts by mass or less, more preferably 25 parts by mass or less, still more preferably 20 parts by mass or less, and even more preferably 15 parts by mass or less with respect to 100 parts by mass of the polycarbonate resin.

One example of the resin composition of the present embodiment is substantially free from flame retardants other than the metal salt-based flame retardant. The expression "substantially free from" means that the content of flame retardants other than the metal salt-based flame retardant among the flame retardants contained in the resin composition is 10% by mass or less, preferably 5% by mass or less, more preferably 3% by mass or less, and still more preferably 1% by mass or less, of the content of the flame retardants other than the metal salt-based flame retardant.

The resin composition of the present embodiment is substantially free from fluoropolymers. The expression "substantially free from" means that the content of fluoropolymers in the resin composition is 0 parts by mass or more and less than 0.01 parts by mass, preferably 0 parts by mass or more and less than 0.001 parts by mass, with respect to 100 parts by mass of the polycarbonate resin. Even when the resin composition of the present embodiment has a configuration in which fluoropolymers such as anti-dripping agent are substantially not blended in, excellent flame retardancy can be achieved, and thus, a resin composition or formed article that is excellent in transparency can be obtained.

<Ultraviolet Absorber>

The resin composition of the present embodiment may contain an ultraviolet absorber.

Preferable examples of the ultraviolet absorber include a benzotriazole-based ultraviolet absorber, a benzoxazine-based ultraviolet absorber, a triazine-based ultraviolet absorber, and a malonate ester-based ultraviolet absorber, and the benzotriazole-based ultraviolet absorber is preferable.

Examples of the benzotriazole-based ultraviolet absorber include 2-(2-hydroxy-5-methylphenyl)-2H-benzotriazole, 2-(2-hydroxy-3,5-di-tert-butylphenyl)-2H-benzotriazole, 2-(2-hydroxy-3-tert-butyl-5-methylphenyl)-2H-benzotriazole, 2-(2-hydroxy-5-tert-octylphenyl)-2H-benzotriazole, 2-(3,5-di-tert-octyl-2-hydroxyphenyl)-2H-benzotriazole, 2-(3,5-di-tert-amyl-2-hydroxyphenyl)-2H-benzotriazole, 2-(3-lauryl-5-methyl-2-hydroxyphenyl)-2H-benzotriazole, 2-(3,5-di-tert-butyl-2-hydroxyphenyl)-5-chloro-2H-benzotriazole, 2-(3-tert-butyl-5-methyl-2-hydroxyphenyl)-5-chloro-2H-benzotriazole, 2-(3,5-bis(1-methyl-1-phenylethyl)-2-hydroxyphenyl)-2H-benzotriazole, bis(3-(2H-benzotriazol-2-yl)-2-hydroxy-5-methylphenyl)methane, bis(3-(2H-benzotriazol-2-yl)-2-hydroxy-5-(1,1,3,3-tetramethylbutyl)phenyl) methane, bis(3-(2H-benzotriazol-2-yl)-2-hydroxy-5-cumylphenyl)methane, bis(3-(2H-benzotriazol-2-yl)-2-hydroxy-5-octylphenyl)methane, 1,1-bis(3-(2H-benzotriazol-2-yl)-2-hydroxy-5-methylphenyl)octane, 1,1-bis(3-(2H-5-chlorobenzotriazol-2-yl)-2-hydroxy-5-methylphenyl)octane, 1,2-ethanediyl bis(3-(2H-benzotriazol-2-yl)-2-hydroxybenzoate), 1,12-dodecanediyl bis(3-(2H-benzotriazol-2-yl)-4-hydroxybenzoate), 1,3-cyclohexanediyl bis(3-(5-chloro-2H-benzotriazol-2-yl)-2-hydroxybenzoate), 1,4-butanediyl bis(3-(2H-benzotriazol-2-yl)-4-hydroxy-5-methylphenylethanoate), 3,6-dioxa-1,8-octanediyl bis(3-(5-methoxy-2H-benzotriazol-2-yl)-4-hydroxyphenylethanoate), 1,6-hexanediyl bis(3-(3-(2H-benzotriazol-2-yl)-4-hydroxy-5-tert-butylphenyl)propionate), p-xylenediyl bis(3-(3-(2H-benzotriazol-2-yl)-4-hydroxyphenyl)propionate), bis(3-(2H-benzotriazol-2-yl)-4-hydroxytoluyl) malonate, bis(2-(3-(2H-benzotriazol-2-yl)-4-hydroxy-5-octylphenyl)ethyl) terephthalate, bis(3-(2H-benzotriazol-2-yl)-4-hydroxy-5-propyltoluyl) octadioate, 2-(2H-benzotriazol-2-yl)-6-phthalimidomethyl-4-methylphenol, 2-(2H-benzotriazol-2-yl)-6-phthalimidoethyl-4-methylphenol, 2-(2H-benzotriazol-2-yl)-6-phthalimidooctyl-4-methylphenol, 2-(2H-benzotriazol-2-yl)-6-phthalimidomethyl-4-tert-butylphenol, 2-(2H-benzotriazol-2-yl)-6-phthalimidomethyl-4-cumylphenol, and 2-(2H-benzotriazol-2-yl)-4,6-bis(phthalimidomethyl)phenol. Among these, 2-(2-hydroxy-5-tert-octylphenyl)-2H-benzotriazole is preferable.

For the ultraviolet absorber, the description in paragraphs 0059 to 0062 of Japanese Patent Laid-Open No. 2016-216534 and the description in paragraphs 0069 to 0082 of Japanese Patent Laid-Open No. 2018-178019 can be referred to, the contents of which are incorporated herein.

In the resin composition of the present embodiment, when containing an ultraviolet absorber, the content of the ultraviolet absorber is preferably 0.01 parts by mass or more, and it is also preferably 1 part by mass or less, more preferably 0.03 to 0.7 parts by mass, and still more preferably 0.05 to 0.5 parts by mass with respect to 100 parts by mass of

the polycarbonate resins (the total of the virgin polycarbonate resin and the recycled polycarbonate resin).

The resin composition of the present embodiment may contain only one type of ultraviolet absorber, or may contain two or more types thereof. When two or more types are contained, it is preferable that the total amount is in the range described above.

<Stabilizer>

The resin composition of the present embodiment may contain a stabilizer.

Examples of the stabilizer include a thermal stabilizer and an antioxidant.

As the thermal stabilizer, a phosphorus-based stabilizer is preferably used.

As the phosphorus-based stabilizer, any of the known ones can be used. Specific examples thereof include: oxoacids of phosphorus such as phosphoric acid, phosphonic acid, phosphorous acid, phosphinic acid, and polyphosphoric acid; acid pyrophosphate metal salts such as sodium acid pyrophosphate, potassium acid pyrophosphate, and calcium acid pyrophosphate; phosphate salts of Group 1 or Group 2B metals such as potassium phosphate, sodium phosphate, cesium phosphate, and zinc phosphate; and organic phosphate compounds, organic phosphite compounds, and organic phosphonite compounds, but organic phosphite compounds are particularly preferable.

As the antioxidant, a hindered phenol-based stabilizer is preferably used.

Specific examples of the hindered phenol-based stabilizer include pentaerythritol tetrakis[3-(3,5-di-tert-butyl-4-hydroxyphenyl)propionate], octadecyl 3-(3,5-di-tert-butyl-4-hydroxyphenyl)propionate, thiodiethylene bis[3-(3,5-di-tert-butyl-4-hydroxyphenyl)propionate], N,N'-hexane-1,6-diyl bis[3-(3,5-di-tert-butyl-4-hydroxyphenyl)propionamide], 2,4-dimethyl-6-(1-methylpentadecyl)phenol, diethyl [[3,5-bis(1,1-dimethylethyl)-4-hydroxyphenyl]methyl]phosphate, 3,3',3",5,5',5"-hexa-tert-butyl-a,a',a''-(mesitylene-2,4,6-triyl)tri-p-cresol, 4,6-bis(octylthiomethyl)-o-cresol, ethylene bis(oxyethylene) bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 2,6-di-tert-butyl-4-(4,6-bis(octylthio)-1,3,5-triazin-2-ylamino)phenol, and 2-[1-(2-hydroxy-3,5-di-tert-pentylphenyl)ethyl]-4,6-di-tert-pentylphenyl acrylate.

Specific examples of such a hindered phenol-based stabilizer include "Irganox (registered trademark; hereinafter the same applies) 1010" and "Irganox 1076" manufactured by BASF SE, and "Adekastab AO-50" and "Adekastab AO-60" manufactured by Adeka Corporation.

The content of the stabilizer in the resin composition of the present embodiment is normally 0.001 parts by mass or more, preferably 0.005 parts by mass or more, and more preferably 0.01 parts by mass or more, and it is also normally 1 part by mass or less, preferably 0.5 parts by mass or less, and more preferably 0.3 parts by mass or less with respect to 100 parts by mass of the polycarbonate resins (the total of the virgin polycarbonate resin and the recycled polycarbonate resin). By setting the content of the stabilizer to the range described above, the effect of adding the stabilizer is more effectively demonstrated.

The resin composition of the present embodiment may contain only one type of stabilizer, or may contain two or more types thereof. When two or more types are contained, it is preferable that the total amount is in the range described above.

<Mold Release Agent>

The resin composition of the present embodiment may contain a mold release agent.

Examples of the mold release agent include an aliphatic carboxylic acid, a salt of an aliphatic carboxylic acid, an ester of an aliphatic carboxylic acid with an alcohol, an aliphatic hydrocarbon compound with a number average molecular weight of 200 to 15,000, a polysiloxane-based silicone oil, a ketone wax, and Light Amide, and an aliphatic carboxylic acid, a salt of an aliphatic carboxylic acid, and an ester of an aliphatic carboxylic acid with an alcohol are preferable.

For details of the mold release agent, the description in paragraphs 0055 to 0061 of Japanese Patent Laid-Open No. 2018-095706 can be referred to, the contents of which are incorporated herein.

When the resin composition of the present embodiment contains a mold release agent, its content is preferably 0.05 to 3% by mass, more preferably 0.1 to 0.8% by mass, and still more preferably 0.1 to 0.6% by mass in the resin composition.

The resin composition of the present embodiment may contain only one type of mold release agent, or may contain two or more types thereof. When two or more types are contained, it is preferable that the total amount is in the range described above.

<Other Components>

In addition to the polycarbonate resin and the metal salt-based flame retardant, as well as the additives described

above, the resin composition of the present embodiment may contain other components other than those described above, as necessary, as long as the desired various physical properties are not significantly impaired. Examples of the other components include other thermoplastic resins, various resin additives, and resin reinforcing materials (glass fibers and glass fillers).

Examples of the resin additives include an antistatic agent, a coloring agent, an anti-fogging agent, a lubricant, an antiblocking agent, a flow improver, a plasticizer, a dispersing agent, and an antibacterial agent. Note that one type of resin additive may be contained, or two or more types thereof may be contained in any combination and in any ratio. For details of these, the description in paragraphs 0059 to 0080 of Japanese Patent Laid-Open No. 2014-065901 and the description in paragraphs 0069 to 0093 of Japanese Patent Laid-Open No. 2018-165017 can be referred to, the contents of which are incorporated herein.

The resin composition of the present embodiment is adjusted such that the total of the polycarbonate resin and the flame retardant, as well as resin additives to be blended as necessary (for example, an ultraviolet absorber, a stabilizer, and a mold release agent), is 100% by mass.

<Physical Properties of Resin Composition>

The resin composition of the present embodiment has a low haze. Specifically, the resin composition of the present embodiment preferably has a haze of 5.0% or less, more preferably 4.0% or less, still more preferably 3.5% or less, and even more preferably 3.0% or less, when formed into a thickness of 1 mm. As for the lower limit value of the haze described above, more than 0% is practical, and even 0.01% or more sufficiently satisfies the required performance.

The haze described above is measured in accordance with the description in Examples, which will be described later.

The resin composition of the present embodiment is preferably excellent in flame retardancy.

Specifically, when the resin composition of the present embodiment is formed into a thickness of 1.5 mm, the total combustion time is preferably 35 seconds or shorter, more preferably 30 seconds or shorter, still more preferably 29 seconds or shorter, even more preferably 27 seconds or shorter, even further preferably 26 seconds or shorter, and yet further preferably 25 seconds or shorter. Also, as for the lower limit of the total combustion time described above, for example, 10 seconds or longer is practical.

Also, when the resin composition of the present embodiment is formed into a thickness of 1.5 mm, the number of dripping times is more preferably 3 or less, the number of dripping times is still more preferably 2 or less, the number of dripping times is even more preferably 1 or less, and no dripping is even further preferable.

The flame retardancy is measured in accordance with the description in Examples, which will be described later.

<Method for Producing Resin Composition>

There is no restriction on the method for producing the resin composition of the present embodiment, and a wide range of known methods for producing polycarbonate resin compositions can be employed. Examples thereof include a method in which the polycarbonate resin, the flame retardant, and other components to be blended as necessary are pre-mixed using, for example, various mixing machines such as a tumbler or a Henschel mixer, and then melt-kneaded using a mixing machine such as a Banbury mixer, a roll, a Brabender, a single screw kneading extruder, a twin screw kneading extruder, or a kneader.

Note that, although the temperature for melt kneading is not particularly restricted, it is normally in the range of 240 to 320°C.

<Formed Article>

One form of the resin composition of the present embodiment is a pellet.

Also, the resin composition described above (for example, pellet) is formed into a formed article by various forming methods. That is, the formed article of the present embodiment is formed from the resin composition or pellet of the present embodiment.

There is no particular restriction on the shape of the formed article, which can be selected as appropriate depending on the application and purpose of the formed article. Examples thereof include film, rod, cylindrical, ring, circular, oval, polygonal, irregular, hollow, frame, box, and panel shapes. Among them, those with a panel shape are preferable, and the thickness is, for example, about 1 mm to 5 mm.

The method for forming the formed article is not particularly restricted, and conventionally known forming methods can be employed. Examples thereof include injection molding, injection compression molding, extrusion molding, profile extrusion, transfer molding, hollow molding, gas-assisted hollow molding, blow molding, extrusion blow molding, IMC (in-mold coating molding) molding, rotational molding, multilayer molding, two-color forming, insert molding,

sandwich molding, foam molding, and pressure forming methods. In particular, the resin composition of the present embodiment is suited for formed articles obtained by injection molding, injection compression molding, and extrusion molding methods. However, it goes without saying that the resin composition of the present embodiment is not limited to formed articles obtained by these methods.

The formed article of the present embodiment is widely used in applications where flame retardancy is required. Specifically, it is suitably used for components of electrical and electronic equipment, office automation equipment, mobile information terminal equipment, machine components, vehicle-related components, construction members, various containers, leisure goods and sundries, lighting equipment, battery peripheral articles, and the like. Specific examples of the vehicle-related components include components of electric vehicles, components of electric bicycles, components of charging guns, and components of charging stands. Among these, the formed article of the present embodiment is particularly suitable for components for displays, mobile information terminal components, household electrical appliances, in-vehicle-related components, battery peripheral articles, or indoor furnishings.

## Examples

Hereinafter, the present invention will be described further specifically with reference to Examples. The materials, amounts used, proportions, treatment contents, treatment procedures, and other details shown in Examples below can be changed as appropriate, as long as such changes do not depart from the subject matter of the present invention. Accordingly, the scope of the present invention is not limited to the specific examples shown below.

If the measuring equipment and other instruments used in Examples are difficult to obtain due to discontinuation or other reasons, other equipment with equivalent performance can be used for the measurement.

### 1. Raw Materials

The raw materials listed in Table 1 and Table 2 below were used.

[Table 1]

| Component | Symbol | |
|---|---|---|
| PCR-polycarbonate resin (A) | A1 | PCR-PC with headlamp lenses as main recovery source<br>trade name: PC2010ANC (Ausell)<br>lot: SY20071902, viscosity average molecular weight: 22000 |
| | A2 | PCR-PC with bottles as main recovery source<br>trade name: PCRGA-WB (Hongy)<br>lot: 201015B, viscosity average molecular weight: 25500 |
| | A3 | PCR-PC with discs as main recovery source<br>trade name: PC75X (Hongy) (recycled polycarbonate resin)<br>lot: 210623, viscosity average molecular weight: 16000 |

(continued)

| Component | Symbol | |
|---|---|---|
| Polycarbonate resin (AX) | AX1 | Substantially linear aromatic polycarbonate resin produced by interfacial polymerization method using bisphenol A as starting raw material (virgin polycarbonate resin)<br>trade name: Iupilon S-3000 (Mitsubishi Engineering-Plastics Corporation)<br>viscosity average molecular weight: 21000 |
| | AX2 | Substantially linear aromatic polycarbonate resin produced by interfacial polymerization method using bisphenol A as starting raw material (virgin polycarbonate resin)<br>trade name: Iupilon H-4000 (Mitsubishi Engineering-Plastics Corporation)<br>viscosity average molecular weight: 16000 |
| | AX3 | Branched aromatic polycarbonate resin produced by melt polymerization method using bisphenol A as starting raw material (virgin polycarbonate resin)<br>trade name: Novarex M2027BF (Mitsubishi Engineering-Plastics Corporation)<br>viscosity average molecular weight: 26500 |
| | AX4 | Branched aromatic polycarbonate resin produced by melt polymerization method using bisphenol A as starting raw material (virgin polycarbonate resin)<br>trade name: Novarex M2028B (Mitsubishi Engineering-Plastics Corporation)<br>viscosity average molecular weight: 28000 |
| | AX5 | Aromatic polycarbonate resin produced by interfacial polymerization method described in Example 1 (PC-1) of International Publication No. WO 2011/132510<br>viscosity average molecular weight: 64000 |
| | AX6 | Branched aromatic polycarbonate resin produced by melt polymerization method using bisphenol C as starting raw material (virgin polycarbonate resin)<br>viscosity average molecular weight: 26000 |

[Table 2]

| Component | Symbol | |
|---|---|---|
| Flame retardant (B) | B1 | Potassium nonafluorobutanesulfonate manufactured by Lanxess AG, trade name: Bayowet C4 |
| | B2 | Potassium diphenylsulfonesulfonate manufactured by Arichem, LLC, trade name: KSS-FR |
| | B3 | Phenoxyphosphazene compound manufactured by Fushimi Pharmaceutical Co., Ltd., trade name: Rabitle FP-100T |
| Ultraviolet absorber (C)) | C1 | 2-(2-Hydroxy-5-(1,1,3,3-tetramethylbutyl)phenyl)benzotriazole manufactured by Shipro Kasei Kaisha Ltd., trade name: SEESORB 709 |
| Stabilizer (D) | D1 | Tris(2,4-di-tert-butylphenyl) phosphite manufactured by Adeka Corporation, trade name: Adekastab 2112 |
| Mold release agent (E) | E1 | Pentaerythritol tetrastearate manufactured by Emery Oleochemicals LLC, trade name: VPG861 |
| | E2 | Stearyl stearate manufactured by NOF Corporation, trade name: UNISTER M-9676 |

The flame retardants B1 to B3 described above are all in solid form at 23°C.

2. Examples 1 to 9 and Comparative Examples 1 to 7

<Production of Resin Composition Pellets>

The components described in Table 1 or Table 2 above were blended in the proportions shown in Table 3 to Table 7 (expressed in parts by mass unless otherwise noted), mixed uniformly with a tumbler mixer, and then one vent was supplied to a twin screw extruder (manufactured by Shibaura Machine Co., Ltd., TEM26SX) from the upstream feeder, and fed into the extruder from the barrel upstream of the extruder at a cylinder set temperature of 260°C, screw speed of 180 rpm, and discharge rate of 25 kg/hr to melt and knead to obtain resin composition pellets.

<HAZE (Haze)>

As for haze, using the 1 mm-thick part of a 3-step test specimen, the value at 23°C was measured in accordance with JIS K-7105.

Specifically, the resin composition pellets obtained as described above were dried at 120°C for 5 hours, and then injection molded into a 3-step test specimen (60 mm × 30 mm × 1 mm thick + 60 mm × 30 mm × 2 mm thick + 60 mm × 30 mm × 3 mm thick) using an injection molding machine ("J55-60H" manufactured by The Japan Steel Works, Ltd.) under the following conditions: cylinder set temperature of 280°C, mold temperature of 80°C, screw speed of 100 rpm, and injection speed of 100 mm/s. However, in Examples 7 and 8 and Comparative Examples 6 and 7, the resin composition pellets were dried at a drying temperature of 100°C for 5 hours and then injection molded into a 3-step test specimen by the same method.

For the flat plate-like test specimen obtained as described above, HAZE (haze) at 23°C was measured using a haze meter in accordance with JIS K-7105.

The haze meter used was the SH-7000 model haze meter manufactured by Nippon Denshoku Industries Co., Ltd.

The unit of haze is shown in %.

<Flame Retardancy>

<<Production of Test Specimen>>

The resin composition pellets obtained as described above were dried at 120°C for 5 hours, and then injection molded into a strip-shaped test specimen for combustion test (125 mm × 13 mm × 1.5 mm thick) using an injection molding machine ("SE100EV" from Sumitomo Heavy Industries, Ltd.) under the following conditions: cylinder set temperature of 260°C, mold temperature of 80°C, screw speed of 100 rpm, and injection speed of 15 mm/s. However, in Examples 7 and 8 and Comparative Examples 6 and 7, the resin composition pellets were dried at a drying temperature of 100°C for 5 hours and then injection molded into a 3-step test specimen by the same method.

<<Combustion Test>>

For the obtained test specimen for combustion test, a vertical combustion test was carried out on five test specimens in accordance with the method of Subject 94 (UL94) of Underwriters Laboratories. The total combustion time is shown in seconds.

<<Comprehensive Evaluation>>

Evaluation was made as follows.

1: No dripping, total combustion time of 35 seconds or shorter
2: No dripping, total combustion time of longer than 35 seconds
3: Number of dripping times: 1 to 2 times
4: Number of dripping times: 3 times or more

[Table 3]

| | | Example | | | |
|---|---|---|---|---|---|
| | | 1 | 2 | 3 | 4 |
| PRC resin (A) | A1 | 30 | 30 | 30 | 30 |
| | A2 | 70 | | | |
| | A3 | | | | |
| PC resin (AX) | AX1 | | 70 | 70 | |
| | AX2 | | | | 45.5 |
| | AX3 | | | | |
| | AX4 | | | | |
| | AX5 | | | | 24.5 |
| | AX6 | | | | |
| Mv(A-1) | | 22000 | 22000 | 22000 | 22000 |
| Mv(A-2) | | 25500 | 26500 | 26500 | 64000 |
| MvA/MvB | | 0.86 | 0.83 | 0.83 | 0.34 |
| Flame retardant (B) | B1 | 0.08 | 0.08 | 0.08 | |
| | B2 | | | | 0.1 |
| Ultraviolet absorber (C) | C1 | 0.3 | | 0.3 | 0.3 |
| Stabilizer (D) | D1 | 0.03 | 0.03 | 0.03 | 0.03 |
| Mold release agent (E) | E1 | 0.1 | 0.1 | 0.1 | 0.1 |
| | E2 | 0.1 | 0.1 | 0.1 | 0.1 |
| Haze (%) | | 3.2 | 0.3 | 0.4 | 0.4 |
| Flame retardancy 1.5 mm | Total combustion time | 33 | 18 | 19 | 29 |
| | Number of dripping times | 0 | 0 | 0 | 0 |
| | Comprehensive evaluation | 1 | 1 | 1 | 1 |

[Table 4]

| | | Example | | | |
|---|---|---|---|---|---|
| | | 5 | 6 | 7 | 8 |
| PRC resin (A) | A1 | 60 | 60 | | 50 |
| | A2 | | | | |
| | A3 | | | 20 | |
| PC resin (AX) | AX1 | | | | |
| | AX2 | 26 | | | 19.5 |
| | AX3 | | | | |
| | AX4 | | 40 | | |
| | AX5 | 14 | | | 10.5 |
| | AX6 | | | 80 | 20 |
| Mv(A-1) | | 22000 | 22000 | 16000 | 22000 |
| Mv(A-2) | | 64000 | 28000 | 26000 | 64000 |
| MvA/MvB | | 0.34 | 0.79 | 0.62 | 0.34 |

(continued)

| | | Example | | | |
|---|---|---|---|---|---|
| | | 5 | 6 | 7 | 8 |
| Flame retardant (B) | B1 | 0.08 | 0.08 | 0.08 | 0.08 |
| | B2 | | | | |
| Ultraviolet absorber (C) | C1 | 0.3 | 0.3 | 0.3 | 0.3 |
| Stabilizer (D) | D1 | 0.03 | 0.03 | 0.03 | 0.03 |
| Mold release agent (E) | E1 | 0.1 | 0.1 | 0.1 | 0.1 |
| | E2 | 0.1 | 0.1 | 0.1 | 0.1 |
| Haze (%) | | 0.7 | 0.2 | 0.6 | 0.3 |
| Flame retardancy 1.5 mm | Total combustion time | 25 | 21 | 21 | 21 |
| | Number of dripping times | 0 | 0 | 0 | 0 |
| | Comprehensive evaluation | 1 | 1 | 1 | 1 |

[Table 5]

| | | Comparative Example | | |
|---|---|---|---|---|
| | | 1 | 2 | 3 |
| PRC resin (A) | A1 | | | |
| | A2 | | 70 | |
| | A3 | | | |
| PC resin (AX) | AX1 | 30 | 30 | 30 |
| | AX2 | | | 45.5 |
| | AX3 | 70 | | |
| | AX4 | | | |
| | AX5 | | | 24.5 |
| | AX6 | | | |
| Mv(A-1) | | - | - | - |
| Mv(A-2) | | 26500 | 25500 | 64000 |
| MvA/MvB | | - | - | - |
| Flame retardant (B) | B1 | 0.08 | 0.08 | |
| | B2 | | | 0.1 |
| Ultraviolet absorber (C) | C1 | 0.3 | 0.3 | 0.3 |
| Stabilizer (D) | D1 | 0.03 | 0.03 | 0.03 |
| Mold release agent (E) | E1 | 0.1 | 0.1 | 0.1 |
| | E2 | 0.1 | 0.1 | 0.1 |
| Haze (%) | | 0.2 | 3.0 | 0.2 |
| Flame retardancy 1.5 mm | Total combustion time | 29 | 32 | 47 |
| | Number of dripping times | 1 | 2 | 2 |
| | Comprehensive evaluation | 3 | 3 | 3 |

[Table 6]

| | | Comparative Example | | |
|---|---|---|---|---|
| | | 4 | 5 | 6 |
| PRC resin (A) | A1 | | | |
| | A2 | | | |
| | A3 | | | |
| PC resin (AX) | AX1 | 60 | | 50 |
| | AX2 | | 20 | 19.5 |
| | AX3 | | | |
| | AX4 | 40 | | |
| | AX5 | | | 10.5 |
| | AX6 | | 80 | 20 |
| Mv(A-1) | | - | - | - |
| Mv(A-2) | | 28000 | 26000 | 64000 |
| MvA/MvB | | - | - | - |
| Flame retardant (B) | B1 | 0.08 | 0.08 | 0.08 |
| | B2 | | | |
| Ultraviolet absorber (C) | C1 | 0.3 | 0.3 | 0.3 |
| Stabilizer (D) | D1 | 0.03 | 0.03 | 0.03 |
| Mold release agent (E) | E1 | 0.1 | 0.1 | 0.1 |
| | E2 | 0.1 | 0.1 | 0.1 |
| Haze (%) | | 0.2 | 0.3 | 0.3 |
| Flame retardancy 1.5 mm | Total combustion time | 38 | 47 | 37 |
| | Number of dripping times | 2 | 2 | 0 |
| | Comprehensive evaluation | 3 | 3 | 2 |

[Table 7]

| | | Example | Comparative Example |
|---|---|---|---|
| | | 9 | 7 |
| PRC resin (A) | A1 | 35 | |
| | A2 | | |
| | A3 | | |
| PC resin (AX) | AX1 | | 35 |
| | AX2 | 42 | 42 |
| | AX3 | | |
| | AX4 | | |
| | AX5 | 23 | 23 |
| | AX6 | | |
| Mv(A-1) | | 22000 | - |
| Mv(A-2) | | 64000 | 26500 |
| MvA/MvB | | 0.86 | - |

(continued)

| | | Example | Comparative Example |
|---|---|---|---|
| | | 9 | 7 |
| Flame retardant (B) | B1 | | |
| | B2 | | |
| | B3 | 10 | 10 |
| Ultraviolet absorber (C) | C1 | 0.3 | 0.3 |
| Stabilizer (D) | D1 | 0.03 | 0.03 |
| Mold release agent (E) | E1 | 0.1 | 0.1 |
| | E2 | 0.1 | 0.1 |
| Haze (%) | | 0.6 | 0.2 |
| Flame retardancy 1.5 mm | Total combustion time | 33 | 45 |
| | Number of dripping times | 0 | 0 |
| | Comprehensive evaluation | 1 | 2 |

In the above tables, Mv(A-1) represents the viscosity average molecular weight (Mv) of the recycled polycarbonate resin (A-1), and Mv(A-2) represents the viscosity average molecular weight (Mv) of the polycarbonate resin (A-2) which has the highest viscosity average molecular weight contained in the resin composition. Also, MvA/MvB represents the value of Mv of recycled polycarbonate (PCR-PC)/Mv of virgin polycarbonate.

In Examples 1 to 9, when the flame retardant (D) was blended at a content of 26 parts by mass with respect to 100 parts by mass of the polycarbonate resin and the rest was carried out in the same manner, extrusion molding could not be performed in any of Examples either and pellets were not obtained.

As is clear from the above results, the formed articles formed from the resin compositions of the present invention were excellent in flame retardancy, especially in the suppression of dripping. In particular, when a fluoropolymer having fibril forming ability (anti-dripping agent) is blended in polycarbonate resin in order to achieve flame retardancy, transparency becomes inferior, but the resin composition of the present invention can achieve flame retardancy even when no fluoropolymer is blended in, and a resin composition that is excellent in transparency was obtained.

## Claims

**1.** A resin composition,

wherein the resin composition comprises a polycarbonate resin and a flame retardant,
wherein the polycarbonate resin comprises a recycled polycarbonate resin,
wherein the resin composition is substantially free from fluoropolymers, and
wherein a ratio between a viscosity average molecular weight (Mv) of a recycled polycarbonate resin (A-1) and a viscosity average molecular weight (Mv) of a polycarbonate resin (A-2) which has a highest viscosity average molecular weight contained in the resin composition, [Mv(A-1)]/[Mv(A-2)], is 0.9 or less.

**2.** A resin composition,

wherein the resin composition comprises a polycarbonate resin and a flame retardant,
wherein the polycarbonate resin comprises a recycled polycarbonate resin,
wherein the resin composition is substantially free from fluoropolymers, and
wherein a content of the flame retardant is less than 25 parts by mass with respect to 100 parts by mass of the polycarbonate resin.

**3.** The resin composition according to claim 1 or 2, wherein the flame retardant comprises a metal salt-based flame retardant.

**4.** The resin composition according to claim 1 or 2, wherein the flame retardant comprises an alkali metal salt of sulfonic

acid.

5. The resin composition according to claim 1 or 2, wherein the flame retardant comprises a phosphorus-based flame retardant.

6. The resin composition according to claim 1 or 2, wherein the flame retardant comprises a phosphazene compound.

7. The resin composition according to claim 1 or 2, wherein the flame retardant is a solid flame retardant.

8. The resin composition according to claim 1 or 2, wherein the recycled polycarbonate resin contains a constituent unit represented by the following formula (1):

Formula (1)

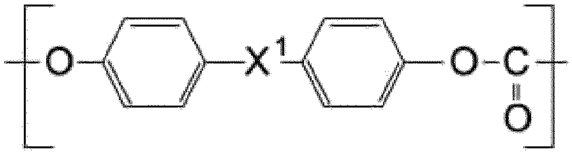

wherein $X^1$ represents any of the following formulae:

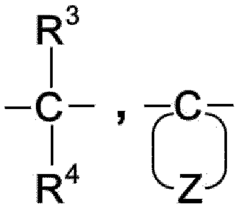

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

9. The resin composition according to claim 1 or 2,

wherein the resin composition further comprises a virgin polycarbonate resin, and
wherein the virgin polycarbonate resin contains a constituent unit represented by the following formula (1):

Formula (1)

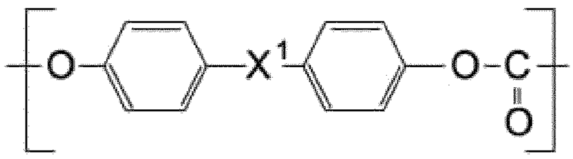

wherein $X^1$ represents any of the following formulae:

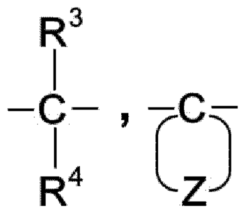

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

**10.** The resin composition according to claim 1 or 2,

wherein the resin composition further comprises a virgin polycarbonate resin, and
wherein the virgin polycarbonate resin contains a constituent unit represented by the following formula (2):

Formula (2)

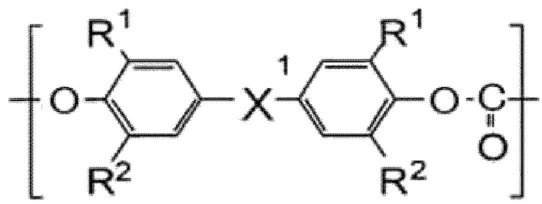

wherein $R^1$ represents a methyl group, $R^2$ represents a hydrogen atom or a methyl group, and $X^1$ represents any of the following formulae:

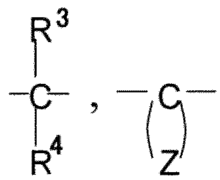

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

**11.** The resin composition according to claim 1 or 2,

wherein a content of the polycarbonate resin is 10 to 95% by mass in the resin composition, and
wherein a content of the flame retardant is 0.005 parts by mass or more with respect to 100 parts by mass of the polycarbonate resin.

**12.** The resin composition according to claim 1 or 2, wherein a mass ratio between the recycled polycarbonate resin (A-1) and the polycarbonate resin (A-2) which has a highest viscosity average molecular weight contained in the resin composition, is 10:90 to 90:10.

**13.** The resin composition according to claim 1 or 2,

wherein the flame retardant comprises an alkali metal salt of sulfonic acid and/or a phosphazene compound,
wherein the flame retardant is a solid flame retardant,
wherein the recycled polycarbonate resin contains a constituent unit represented by the following formula (1),
wherein the resin composition further comprises a virgin polycarbonate resin,
wherein the virgin polycarbonate resin contains a constituent unit represented by the following formula (1) and/or

a constituent unit represented by the following formula (2),
wherein a content of the polycarbonate resin is 10 to 95% by mass in the resin composition,
wherein a content of the flame retardant is 0.005 parts by mass or more with respect to 100 parts by mass of the polycarbonate resin, and
wherein a mass ratio between the recycled polycarbonate resin (A-1) and the polycarbonate resin (A-2) which has a highest viscosity average molecular weight contained in the resin composition, is 10:90 to 90:10:

Formula (1)

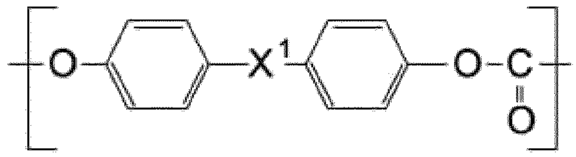

wherein $X^1$ represents any of the following formulae:

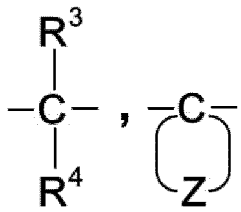

wherein $R^3$ and $R^4$ each independently represent a hydrogen atom or a methyl group, and Z represents a group that is bonded to C to form an alicyclic hydrocarbon having 6 to 12 carbon atoms and optionally having a substituent,

Formula (2)

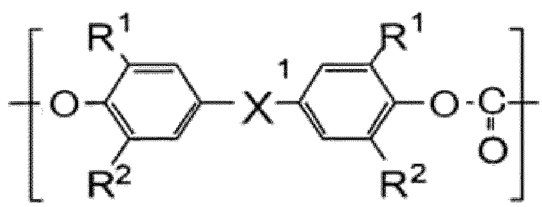

wherein $R^1$ represents a methyl group, $R^2$ represents a hydrogen atom or a methyl group, and $X^1$ represents any of the following formulae:

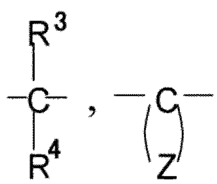

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

**14.** A pellet of the resin composition according to claim 1 or 2.

**15.** A formed article formed from the resin composition according to claim 1 or 2.

**16.** A formed article formed from the pellet according to claim 14.

**17.** A method for producing a resin composition that is substantially free from fluoropolymers,

wherein the method comprises melt-kneading a recycled polycarbonate resin (A-1), a polycarbonate resin (A-2), and a flame retardant,
and
wherein a ratio between a viscosity average molecular weight (Mv) of the recycled polycarbonate resin (A-1) and a viscosity average molecular weight (Mv) of the polycarbonate resin (A-2), [Mv(A-1)]/[Mv(A-2)], is 0.9 or less.

# INTERNATIONAL SEARCH REPORT

International application No. **PCT/JP2023/042677**

## A. CLASSIFICATION OF SUBJECT MATTER

***C08L 69/00***(2006.01)i; ***C08K 3/016***(2018.01)i; ***C08K 5/098***(2006.01)i; ***C08K 5/42***(2006.01)i; ***C08K 5/51***(2006.01)i; ***C08K 5/5399***(2006.01)i
FI: C08L69/00; C08K3/016; C08K5/42; C08K5/51; C08K5/5399; C08K5/098

According to International Patent Classification (IPC) or to both national classification and IPC

## B. FIELDS SEARCHED

Minimum documentation searched (classification system followed by classification symbols)

C08L69/00; C08K3/016; C08K5/098; C08K5/42; C08K5/51; C08K5/5399

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X<br>Y | WO 2019/198303 A1 (SONY CORP.) 17 October 2019 (2019-10-17) claims, paragraphs [0081]-[0103], examples | 1-17<br>3-6, 13 |
| X<br>Y | JP 2009-298845 A (SONY CORP.) 24 December 2009 (2009-12-24) claims, paragraphs [0044]-[0089], examples | 1-17<br>3-6, 13 |
| X<br>Y | WO 2019/176213 A1 (SONY CORP.) 19 September 2019 (2019-09-19) claims, paragraphs [0071]-[0081], examples | 1-4, 7-17<br>3-6, 13 |
| X<br>Y | JP 8-142054 A (TEIJIN CHEMICALS LTD.) 04 June 1996 (1996-06-04) claims, examples | 1, 2, 5, 7-12, 14-17<br>3-6, 13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 January 2024** | **06 February 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

INTERNATIONAL SEARCH REPORT

International application No.
PCT/JP2023/042677

C. DOCUMENTS CONSIDERED TO BE RELEVANT

| Category* | Citation of document, with indication, where appropriate, of the relevant passages | Relevant to claim No. |
|---|---|---|
| X<br><br>Y | JP 2003-200133 A (NIHON MARUSERU CO., LTD.) 15 July 2003 (2003-07-15) claims, paragraphs [0059]-[0068], [0071], examples | 1, 5, 7-12, 14-17<br><br>3-6, 13 |
| X<br><br>Y | JP 2018-087295 A (DAICEL POLYMER LTD.) 07 June 2018 (2018-06-07) claims, examples | 2, 7-12, 14-16<br><br>3-6, 13 |
| A | JP 2007-321096 A (UMG ABS LTD.) 13 December 2007 (2007-12-13) entire text | 1-17 |
| A | JP 2012-025819 A (IDEMITSU KOSAN CO., LTD.) 09 February 2012 (2012-02-09) entire text | 1-17 |
| A | JP 2004-262045 A (UMG ABS LTD.) 24 September 2004 (2004-09-24) entire text | 1-17 |

Form PCT/ISA/210 (second sheet) (July 2022)

**INTERNATIONAL SEARCH REPORT**
**Information on patent family members**

International application No.
**PCT/JP2023/042677**

| Patent document cited in search report | Publication date (day/month/year) | Patent family member(s) | Publication date (day/month/year) |
|---|---|---|---|
| WO 2019/198303 A1 | 17 October 2019 | US 2021/0130609 A1<br>claims, paragraphs [0121]-[0144], examples<br>CN 111989369 A | |
| JP 2009-298845 A | 24 December 2009 | US 2009/0306275 A1<br>claims, paragraphs [0047]-[0091], examples<br>EP 2133390 A1<br>CN 101602885 A | |
| WO 2019/176213 A1 | 19 September 2019 | (Family: none) | |
| JP 8-142054 A | 04 June 1996 | (Family: none) | |
| JP 2003-200133 A | 15 July 2003 | (Family: none) | |
| JP 2018-087295 A | 07 June 2018 | (Family: none) | |
| JP 2007-321096 A | 13 December 2007 | (Family: none) | |
| JP 2012-025819 A | 09 February 2012 | US 2013/0018115 A1<br>entire text<br>WO 2011/078334 A1<br>EP 2517855 A1<br>TW 201132480 A<br>CN 102892561 A<br>KR 10-2012-0135211 A | |
| JP 2004-262045 A | 24 September 2004 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021 A
- JP 187863 A
- WO 2017099226 A
- JP 2011046769 A
- JP 2015 A
- JP 117298 A
- JP 2022080749 A
- JP 2016 A
- JP 216534 A
- JP 2018178019 A
- JP 2018 A
- JP 095706 A
- JP 2014065901 A
- JP 2018165017 A
- WO 2011132510 A